# EUROPEAN PATENT APPLICATION

(11) **EP 0 790 152 A2**
(43) Date of publication of application: **20.08.1997**
(21) Application number: 96306987.7
(22) Date of filing: 25.09.1996
(51) Int. Cl.: B60R 21/20

(54) **Side-impact airbag module assembly incorporating combination airbag inflator and module housing**

(30) Priority: 28.09.1995 US 535643
(71) Applicant: MORTON INTERNATIONAL, INC., Chicago, Illinois 60606 (US)
(72) Inventor: Green, David J., Brigham City, Utah 84302 (US); Cunningham, Donald J., North Ogden, Utah 84414 (US); Lauritzen, Donald R., Hyrum, Utah 84319 (US); Storey, J. Kirk, Farmington, Utah 84025 (US); Olson, Brent K., Clearfield, Utah 84015 (US)
(74) Representative: Bankes, Stephen Charles Digby

(57) **Abstract**

An airbag module housing including an extruded unitary elongated body (16) including: two slotted airbag receiving channels (28, 29); a gas generant chamber (52); four fastener channels (32, 33, 34, 35); gas exhaust ports (26); and cylindrical endplugs (36, 38) held sealingly into ends of the gas generant chamber (52) by endplates (40, 42) and fasteners (48) which engage the fastener channels (32, 33, 34, 35). Each endplate (40, 42) includes an integral mounting bracket (44, 46) and one includes an aperture (43) through which an initiator (58) mounted in the associated endplug (38) is accessible. A folded airbag (14) has a mouth bounded by (i) two tubes (66, 67) which are held in the airbag receiving channels (28, 29) by retainer rods (68, 69) and (ii) cushion ends which are clamped between the endplates (40, 42) and the associated ends (22, 24) of the elongated body (16). A tearable or breakable wrapper (60) holds the airbag in its folded state.

## Description

### FIELD OF THE INVENTION

The present invention relates to an airbag module. More particularly, the present invention relates to a side-impact airbag module incorporating a combination airbag inflator and module housing and a soft-pack airbag cushion.

### BACKGROUND OF THE INVENTION

Providing a relatively compact side-impact airbag module requiring fewer parts than previous airbag modules and that includes an airbag cushion attachment that does not produce point loading in the airbag cushion would be useful.

An airbag module is part of an inflatable restraint system that is employed in an automobile for protecting an occupant against injury by physically restraining the occupant's body when the automobile encounters a collision. As its name implies, a side impact airbag module protects an occupant against an impact to the side of the automobile and is normally positioned somewhere between the occupant and the side of the automobile closest to the occupant. Because the side-impact airbag module is mounted within the seat, on the exterior of the seat, on a side door or on a side pillar of the automobile, the size of a side-impact airbag module must be kept to a minimum.

The airbag module normally includes an airbag cushion and an inflator contained within a reaction canister. The inflator includes an inflator housing having gas exhaust ports and containing gas generant that, once triggered by a remote collision sensor, provides the inflation gas for inflating the airbag cushion. The airbag cushion has an open mouth and is secured to the canister adjacent the inflator so that the open mouth is positioned over the gas exhaust ports. The airbag cushion is secured using fasteners such as bolts, for example.

A typical airbag module has some drawbacks which may not make it suitable for use as a side-impact airbag module. First, using bolts as a bag retention method causes high stresses where the bag comes in contact with the fasteners, causing unwanted point loading on the bag. In addition, because the module includes a separate reaction canister and inflator housing, the module requires more parts and may be larger than preferred for a side-impact airbag module.

One prior art airbag module eliminates the need for airbag fasteners such as bolts or the like in order to reduce point loading on the airbags. U.S. Patent 5,344,182 discloses a fastenerless airbag attachment system for use in a passenger side airbag module. A thickened gas inlet opening of the airbag is secured by a bead material within a channel portion of a cushion retainer which is secured in an attachment sleeve portion of a reaction housing. This slide-in method of attachment reduces or eliminates point loading on the airbag cushion as well as reducing parts, assembly time and making the module more conducive to automated assembly.

Other prior art airbag modules reduce the number of parts by combining components. U.S. Patent 5,387,009 and U.S. Patent 5,441,705 disclose passenger side airbag modules incorporating extruded, one-piece, inflator housing and reaction canisters. Also U.S. Patent 5,407,223 discloses an extruded reaction canister having integral channels extending along its length that receive integral rails of an extruded inflator chamber to mate the reaction canister and inflator chamber. These airbag modules reduce parts, assembly time and are more conducive to automated assembly.

Providing a side-impact airbag module assembly of relatively compact size, requiring fewer parts, less assembly time, that is conducive to automated assembly, and has an airbag cushion attachment that reduces unwanted point loading in the airbag would be useful.

### SUMMARY OF THE INVENTION

An object, therefore, of the present invention is to provide a side-impact airbag module having a relatively compact size. Another object of the present invention is to provide a side-impact airbag module requiring fewer parts. An additional object of the present invention is to provide a side-impact airbag module requiring less assembly time. A further object of the present invention is to provide a side impact airbag module that is more conducive to automated assembly. Yet another object of the present invention is to provide a side-impact airbag module having an airbag cushion attachment that reduces point loading in the airbag cushion.

In carrying out this invention, there is provided a combination airbag inflator and module housing that includes a unitary one-piece hollow elongated longitudinal body. The longitudinal body has an outer surface, an inner surface, a first open end, a second open end, a plurality of gas exhaust ports extending from the inner surface to the outer surface, and two airbag receiving channels parallel with the longitudinal body and located on the outer surface on opposite sides of the plurality of gas exhaust ports. A first endplug seals the first open end and a second endplug seals the second open end, the second endplug having an access opening. A first endplate is secured over the first open end of the longitudinal body and a second endplate is secured over the second open end and has an aperture located adjacent the access opening in the second endplug. The endplates close ends of the airbag receiving channels and each endplate has a mounting bracket extending therefrom.

According to one aspect of the present invention, the unitary one-piece elongated longitudinal body of the combination airbag inflator and module housing further includes a plurality of spaced-apart fastener receiving channels parallel with the longitudinal body and located on the outer surface. A plurality of fasteners engage the fastener receiving channels to secure the endplates to the longitudinal body. According to another aspect of the present invention, the unitary one-piece elongated longitudinal body is a one-piece extrusion.

According to an additional aspect of the present invention, the combination airbag inflator and module housing is incorporated in an airbag module assembly. The airbag module assembly further includes a gas generant contained within a gas generant chamber defined by the inner surface of the longitudinal body and the first and second endplugs, an ignitor connectable to a remote collision sensor and contained within the access opening in the second endplug for igniting the gas generant, and an airbag cushion. The airbag cushion is contained in a tearable or breakable wrapper and has an open mouth partly formed by opposed mouth sides that are secured within the airbag receiving channels between the endplates. The mouth is additionally formed by opposed mouth ends retained by the endplates.

The present invention, therefore, provides a side-impact airbag module assembly that eliminates the need for a reaction canister for containing the airbag cushion. The airbag module assembly has a relatively compact size, requires fewer parts, less assembly time, is conducive to automated assembly, and has an airbag cushion attachment that reduces point loading in the airbag.

The invention together with further objects, features, advantages and aspects thereof, will be more clearly understood from the following description taken in connection with the accompanying drawings in which:

### BRIEF DESCRIPTION OF THE DRAWINGS

FIG. **1** is a perspective view of an airbag module according to the present invention; and
FIG. **2** is an exploded perspective view of the airbag module of FIG. **1**.

The same reference numerals refer to the same elements throughout the various figures.

### DETAILED DESCRIPTION OF THE INVENTION

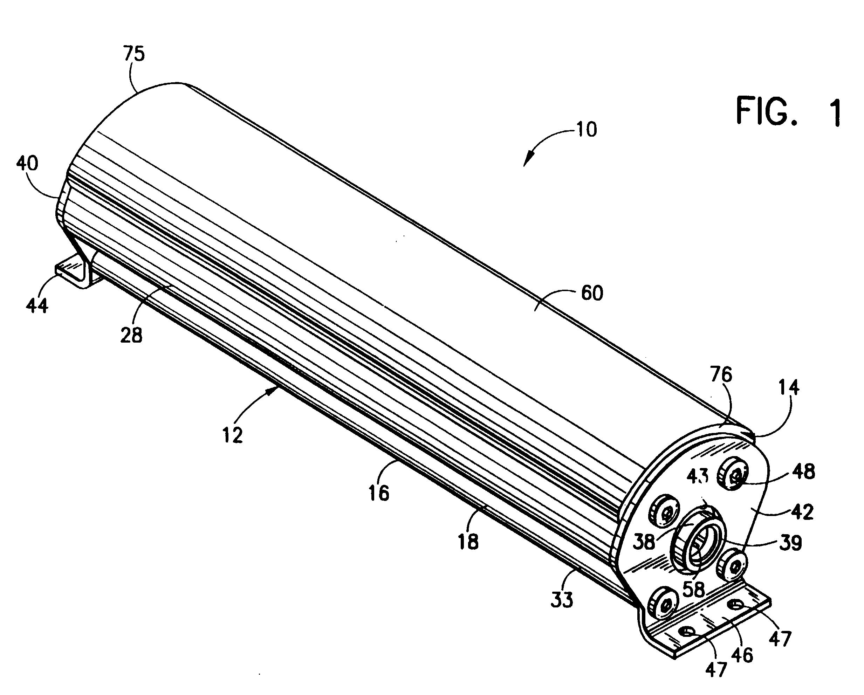

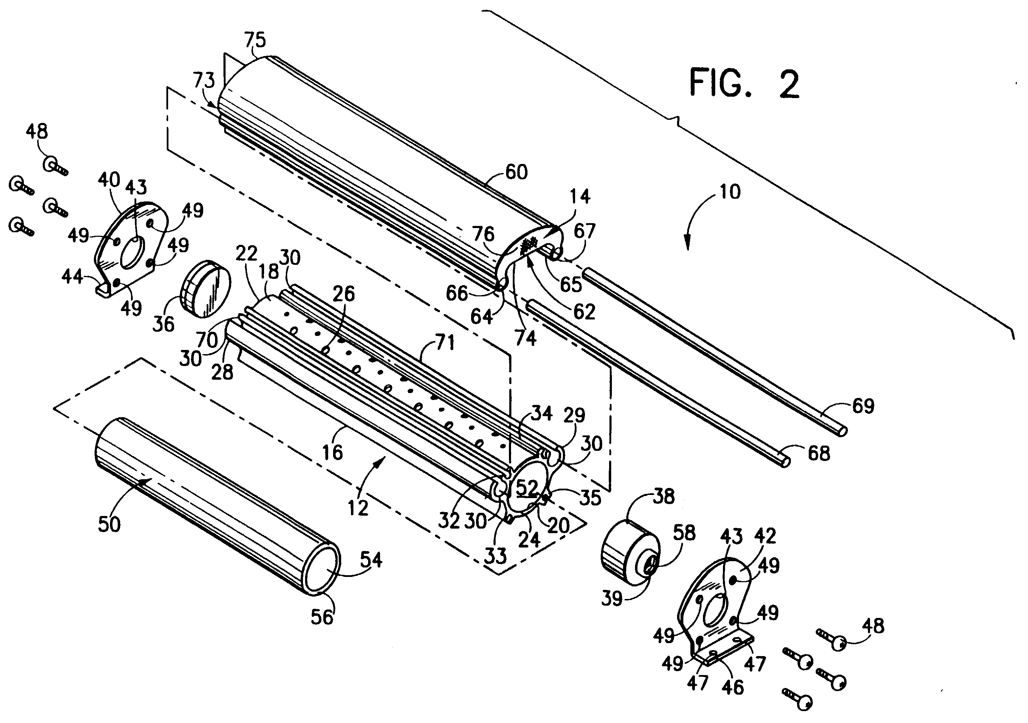

Referring to FIGS. **1** and **2**, the present invention is directed to a side-impact airbag module assembly, generally represented by the reference numeral **10**, that substantially eliminates the need for a reaction canister. The airbag module assembly **10** comprises a combination airbag inflator and module housing, generally represented by the reference numeral **12,** and an airbag cushion **14**.

The combination airbag inflator and module housing **12** includes a unitary one-piece hollow elongated longitudinal body **16** having an outer surface **18**, an inner surface **20**, a first open end **22**, a second open end **24,** and a plurality of gas exhaust ports **26** extending from the inner surface **20** to the outer surface **18**. The longitudinal body **16** also includes two airbag receiving channels **28,29** parallel with the longitudinal body **16** and located on the outer surface **18** on opposite sides of the plurality of gas exhaust ports **26**. A plurality of spaced-apart fastener receiving channels **32,33,34,35** are located on the outer surface **18** parallel with the longitudinal body **16.**

It is important to note that the longitudinal body **16**, airbag receiving channels **28,29** and fastener receiving channels **32,33,34,35** are joined as a single member which is preferably extruded and cut to the desired length. The material employed may be, for example, aluminum, and the body **16** is drilled or pierced to form the plurality of gas exhaust ports **26**.

The combination airbag inflator and module housing **12** also includes a first endplug **36** sealing the first open end **22** and a second endplug **38** sealing the second open end **24**, the second endplug **38** having an access opening **39**. A first endplate **40** is secured over the first open end **22** of the longitudinal body **16** and the first endplug **36,** and a second endplate **42** is secured over the second open end **24** and second endplug **38** and the second endplate **42** has an aperture **43** located adjacent the access opening **39** in the second endplug **38**. (As shown, each endplate **40, 42** has an aperture **43** so that the endplates are interchangeable.) Each endplate **40,42** has an integral, generally unitary, mounting bracket **44,46** extending from a peripheral edge thereof for mounting the airbag module **10** within an automobile, and the mounting brackets **44,46** include mounting holes **47.** A plurality of fasteners **48** extend through fastener receiving holes **49** in the endplates **40,42** to engage the fastener receiving channels **32,33,34,35**, securing the endplates **40,42** to the longitudinal body **16**. The endplates **40,42** retain the endplugs **36,38** within the open ends **22,24** of the longitudinal body **16,** are generally circular and sized so that they close ends **30** of the airbag receiving channels **28,29**.

The airbag module assembly **10** further includes a gas generant **50** contained within a gas generant chamber **52** defined by the inner surface **20** of the longitudinal body **16** and the first and second endplugs **36,38**. The gas generant **50** or filter pack, which is known in the art, generally comprises a gas generant material or assembly **54** surrounded by a filter material **56** such as a screen mesh, for example. An ignitor or initiator **58** is contained within the access opening **39** in the second endplug **38**, and is connectable to a remote collision sensor for igniting the gas generant **50**.

The airbag cushion **14** is folded and bundled in a tearable or breakable wrapper **60** comprising a Tyvek paper cover or plastic shrink wrap, and has an open mouth **62** partly formed by two opposed mouth sides **64,65**. The two opposed mouth sides **64,65** of the airbag cushion **14** form airbag tubes **66,67** that are located within the airbag receiving channels **28,29** of the longitudinal body **16**. A pair of airbag retainer rods **68,69** are located within the airbag tubes **66,67**. The rods **68,69** are wider than slots **70,71** in the channels **28,29** so that the retainer rods **68,69** and airbag tubes **66,67** are secured within the channels **28,29**. The rods **68,69** and airbag tubes **66,67** are also contained between the endplates **40,42** whereby the airbag cushion **14** is secured to the combination airbag inflator and module housing **12** with the open mouth **62** of the airbag cushion **14** positioned above the gas exhaust ports **26** on the longitudinal body **16.** The present invention, therefore, provides a slide-in airbag cushion attachment. The open mouth **62** of the airbag cushion **14** is additionally formed by two opposed mouth ends **73,74** that are retained by the endplates **40,42**.

As shown in FIG. **1**, the endplates **40,42** extend above the airbag receiving channels **28,29** to substantially cover opposed ends **75,76** of the folded and bundled airbag cushion **14**. This type of airbag cushion mounting and packing is referred to as a "soft pack" since the endplates **40,42**, the wrapper **60** and the slide-in method of attaching the airbag cushion **14** to the combination airbag inflator and module housing **12** eliminate the need for a reaction canister normally used with an airbag module assembly, and substantially reduce the size of the airbag module assembly **10**. In addition, this type of airbag mounting reduces parts, simplifies assembly and reduces or eliminates unwanted point loading in the airbag cushion **14**.

The present invention, therefore, provides a side-impact airbag module assembly **10** having a relatively compact size, that requires fewer parts, less assembly time, is conducive to automated assembly, and has an airbag cushion attachment that reduces point loading in the airbag cushion **14**.

## Claims

1. A combination side-impact airbag inflator and module housing (12) comprising:
a unitary one-piece hollow elongated longitudinal body (16) having an outer surface (18), an inner surface (20), opposing first and second open ends (22, 24), a plurality of gas exhaust ports (26) extending from the inner surface (18) to the outer surface (20), and two airbag receiving channels (28, 29) parallel with the longitudinal body (16) and located on the outer surface (18) on opposite sides of the plurality of gas exhaust ports (26);
a first endplug (36) located within and sealing the first open end (22) and a second endplug (38) located within and sealing the second open end (24), the second endplug (38) having an access opening (39); and
a first endplate (40) over both the first open end (22) of the longitudinal body (16) and the first endplug (36) and a second endplate (42) over both the second open end (24) and the second endplug (38), the second endplate (42) having an aperture located adjacent the access opening (39) in the second endplug (38), the first and second endplates (40, 42) also closing ends of the airbag receiving channels (28, 29) for retaining an airbag mouth within said channels (28, 29) and each endplate (40, 42) having a mounting bracket (44, 46) extending therefrom.

2. The housing (12) of claim 1 wherein the longitudinal body (16) further includes a plurality of spaced-apart fastener receiving channels (32, 33, 34, 35) parallel with the longitudinal body (16) and located on the outer surface (18), a plurality of fasteners (48) engaging the fastener receiving channels to secure the endplates (40, 42) to the longitudinal body (16).

3. The housing (12) of claim 1 or claim 2 wherein the unitary one-piece elongated longitudinal body is a one-piece extrusion.

4. The housing (12) of claim 1, 2 or 3 wherein each mounting bracket (44, 46) extends generally perpendicular from a peripheral edge of the endplate (40, 42).

5. A side impact airbag module assembly (10) including a housing (12) as claimed in any preceding claim.

6. The assembly (10) of claim 5 including:
gas generant (50) located within an internal gas generant chamber (52) of the housing (12); and
an igniter (58) connectable to a remote collision sensor and located within the access opening (39) for igniting the gas generant (50).

7. The assembly (10) of claim 6 wherein the gas generant (50) comprises a gas generant material (54) surrounded by a filter material (56).

8. The assembly (10) of claim 5, 6 or 7 including an inflatable airbag cushion (14).

9. The assembly (10) of claim 8 wherein each airbag receiving channel (28, 29) has a slot (70, 71) running along the channel (28, 29) and the inflatable airbag cushion has an open mouth partly formed by two opposing mouth sides (64, 65), each mouth side forming an airbag tube (66, 67), an airbag retaining rod (68, 69) located within each airbag tube (66, 67), and said airbag retaining rods (68, 69) being wider than the slots (70, 71) in the airbag receiving channels (28, 29), each airbag tube (66, 67) and its retaining rod (68, 69) being located within one of the airbag receiving channels (28, 29) so that the open mouth of the airbag (14) is located above the plurality of gas exhaust ports (26).

10. The assembly (10) of claim 8 or 9 wherein the inflation mouth of the airbag cushion (14) includes opposed mouth ends (75, 76) that are retained between the endplates (40, 42) and the opposing ends (22, 24) of the longitudinal body (16).

11. The assembly (10) of claim 8, 9 or 10 wherein the inflatable airbag cushion (14) is folded and bundled in a tearable or breakable wrapper (60).
